# FASCICULE DE BREVET EUROPEEN

(11) **EP 0 546 881 B1**
(45) Date de publication et mention de la délivrance du brevet: **17.01.1996**
(21) Numéro de dépôt: 92403198.2
(22) Date de dépôt: 27.11.1992
(51) Int. Cl.: C02F 3/34

(54) **Procédé et dispositif de multiplication de souches sélectionées, appliqués au traitement des graisses et des fécules**
Verfahren und Vorrichtung für die Vermehrung von ausgewählten Stämmen, die für die Behandlung von Fetten und Stärchen angewendet werden
Process and apparatus for the application of selected strains, applied to the treatment of fats and starches

(30) Priorité: 10.12.1991 FR 9115255
(43) Date de publication de la demande: 16.06.1993
(73) Titulaire: SOCIETE COMMERCIALE ET FINANCIERE DE SAINT DIZIER SA, F-52170 Chevillon (FR)
(72) Inventeur: Bald, Jean-Louis, F-92100 Boulogne (FR); Gardon, René, F-92100 Boulogne (FR); Lebesgue, Yves, F-95450 Commeny (FR)
(74) Mandataire: Gérardin, Robert Jean René

(56) Documents cités:
- WO-A-89/01457
- DE-A- 2 938 291
- DE-A- 3 834 244
- DE-A- 3 912 419
- FR-A- 2 293 239
- FR-A- 2 340 909
- PATENT ABSTRACTS OF JAPAN vol. 15, no. 275 (C-849)(4803) 12 Juillet 1991
- GWF DAS GAS-UND WASSERFACH. vol. 130, no. 7, Juillet 1989, MUNCHEN DE pages 328 - 333 PAUL J[GER ET AL. 'DIE WIRKUNG FETTABBAUENDER BAKTERIEN UND ENZYME IN DER KL[RANLAGE SAALBACH'

## Description

L'invention concerne un procédé et un dispositif de séparation et de récupération des graisses et des fécules par voie biologique dans les effluents domestiques et industriels liquides.

Jusqu'alors, les graisses animales et végétales, ainsi que les fécules, étaient entraînées dans les réseaux d'eau usée, soit directement dans le milieu récepteur, soit vers des stations d'épuration, où elles sont, généralement, interceptées par des séparateurs, puis récupérées dans des bacs adéquats. Toutefois, dans le second cas, le dispositif doit, pour rester efficace, être vidangé et nettoyé régulièrement ; ces interventions sont la source de nombreux désagréments et nuisances et exigent l'organisation d'une collecte, qui aboutit à la concentration d'une énorme quantité de graisse (35 000 m3 environ, rien que pour la région parisienne), qui pose ensuite des problèmes de traitement.

Les filières de traitement de ces graisses, les plus couramment utilisées jusqu'à maintenant, sont :
- utilisation directe comme combustible,
- revalorisation en tant que corps gras,
- traitement par compostage et lombriculture,
- dégradation par digestion anaérobie, en vue de la production de méthane utilisable ensuite comme gaz combustible (brevet français n° 2 620 439).

Cependant, ces filières, au demeurant assez contraignantes, restent peu utilisées. Aussi, les matières grasses, collectées dans les bacs à graisse, sont-elles, le plus souvent, déversées dans des décharges dites "contrôlées", qui posent problème au niveau écologique.

De toute façon, l'exploitation des bacs à graisse impose une contrainte assez lourde, dans la mesure où la réglementation en vigueur impose leur vidange régulière, et la stagnation qui en résulte entre les vidanges peut engendrer des désordres dans le milieu environnant, en particulier des nuisances olfactives.

Il résulte de cette situation que, dans la pratique, une part importante des graisses et des fécules passe dans le milieu récepteur, constitué du réseau d'égouts.

L'accumulation de ces produits, dans les réseaux d'égouts, peut provoquer des perturbations assez importantes dans ceux-ci, telles que : production d'anhydride sulfureux, de gaz carbonique et accumulation de graisses modifiant le régime hydraulique des dits réseaux. Les stations d'épuration sont, aussi, perturbées, dans leur fonctionnement par l'arrivée de masses de graisse incontrôlable, d'où une surchage susceptible d'entraîner des disfonctionnements et une diminution du rendement épuratoire.

Aussi, a-t-il été envisagé (brevet européen 228 520) d'ensemencer les bacs à graisse avec des bactéries préalablement sélectionnées pour leur fonction lipolytique. Ces bactéries (aérobacter, bacillus, cellulomonas, etc), combinées aux sels minéraux constituant le milieu et à des substrats organiques, constituent des bio-additifs, commercialisés par certaines entreprises pour le traitement des graisses (brevet français 2 573 770).

Cependant, cette technique n'est pas suffisamment fiable pour garantir un rejet d'eau usée ne comportant qu'une proportion de graisse et de fécule inférieure à celle imposée par la réglementation en vigueur; d'où les difficultés qu'elle a rencontrées, jusqu'alors, à s'imposer sur le marché, si ce n'est pour un montage en amont d'un bac à graisse traditionnel qui doit, de toute façon, être vidangé selon la périodicité imposée par la réglementation.

On connaît déjà par les documents WO-A-8.901.457, JP-A-30.94.898, DE-A-3.834.244 et DE-A-2.938.291, des procédés et des dispositifs correspondants aux préambules des revendications 1 et 4. Les graisses et les fécules sont dégradées par voie biologique à partir de ferments obtenus par fermentation aérobie, dans un bioréacteur, de cultures enrichies en micro-organismes, à partir d'un bio-additif constitué de plusieurs souches sélectionnées, de sels minéraux, d'un substrat et d'eau, avec recyclage des ferments. Le dispositif est constitué, pour l'essentiel, d'un bac à grasse dans lequel sont fixés des paniers contenant des éléments de fixation de la biomasse, dans lequel sont transférés les ferments provenant d'un bioréacteur. Ces procédés et ces dispositifs ont été conçus pour le traitement des graisses subsistant dans les effluents urbains, au niveau des stations d'épuration et non pour le traitement de la grasse collectée dans les bacs à graisse de restaurants ou d'industries alimentaires, afin d'éviter la collecte de cette grasse et sa concentration en des endroits où elle est ensuite très difficile à traiter et à éliminer. Par ailleurs, de telles installations, compte-tenu de leur domaine d'emploi, n'exigent pas un contrôle de l'apport en oxygène indispensable au traitement biologique aérobie.

On connaît aussi par le document FR-A-2.293.239, un procédé et un dispositif pour assurer la circulation continue d'un mélange de liquide et de gaz en utilisant un système comportant deux compartiments cylindriques coaxiaux dont l'un assure le mouvement ascendant sous l'effet de bulles de gaz difusées à son aplomb et dont l'autre assure le mouvement descendant. Toutefois, rien n'est prévu pour assurer le contrôle du mélange ni en faire varier sa proportion.

On connaît aussi par le document FR-A-2.340.909 des supports biologiques assurant une forte rétention de micro-organismes. Ils sont constitués principalement de granulats de dimensions moyennes réalisés à partir d'un mélange d'argile cuite et de petites quantités d'oligo-éléments. De tels granulés ont été prévus pour constituer des lits bactériens dans des installations de traitement d'eau usée, toutefois, leur utilisation sur des eaux fortement chargées en graisse était jusqu'à présent exclue compte-tenu de leur susceptibilité au colmatage.

La présente invention vise à remédier à ces inconvénients. Cette invention telle qu'elle est caractérisée dans les revendications, a pour objet un procédé et un dispositif constituant un système autonome de traitement des grasses et des fécules, directement sur leur lieu de production, capable d'éliminer celles-ci, de l'hydrolyse jusqu'à la dégradation totale, par injection contrôlée de bio-additifs spécifiques, provenant d'un bioréacteur, et fixation d'une biomasse sur un support disposé dans le bac.

Les avantages obtenus, grâce à cette invention, consistent essentiellement en ceci qu'elle permet d'obtenir, de façon entièrement automatisée, la production in situ d'une biomasse, suffisante à la transformation journalière des graisses et des fécules retenues par un bac à graisse, en vue de permettre leur rejet direct dans le réseau d'eau usée, en conformité avec les réglementations, en limitant l'intervention à une vidange annuelle, au lieu d'une vidange bimensuelle ou mensuelle ; ce qui permet de réaliser une économie intéressante, car le coût d'enlèvement des graisses est nettement supérieur à celui du traitement.

D'autres caractéristiques et avantages apparaîtront dans la description qui va suivre d'un dispositif réalisé selon l'invention, donné à titre d'exemple non limitatif, au regard des dessins annexés sur lesquels :
- la figure 1 représente un schéma de principe de l'installation,
- la figure 2 représente un schéma de principe du bioréacteur et de son environnement, comprenant un système de vidange eau/air,
- la figure 3 représente un schéma de principe du bioréacteur et de son environnement, comprenant un système de vidange par électro-pompe,
- la figure 4 représente le diagramme de programmation, sur 24 heures, du fonctionnement de l'ensemble du dispositif.

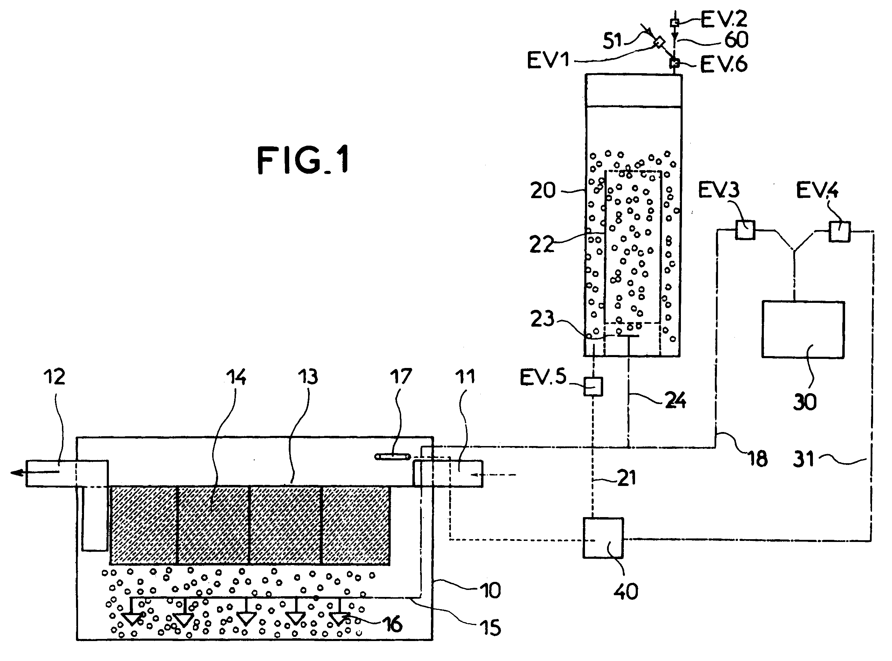

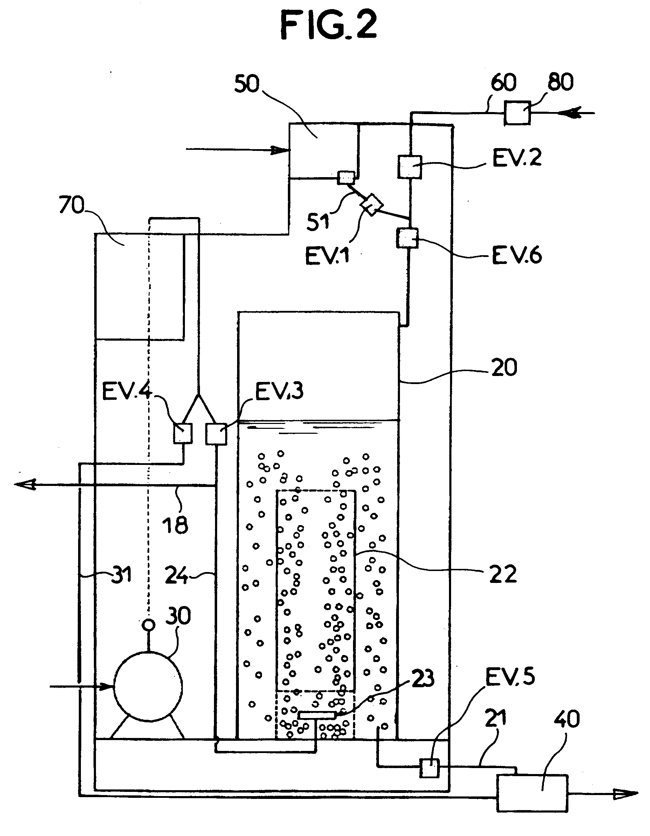

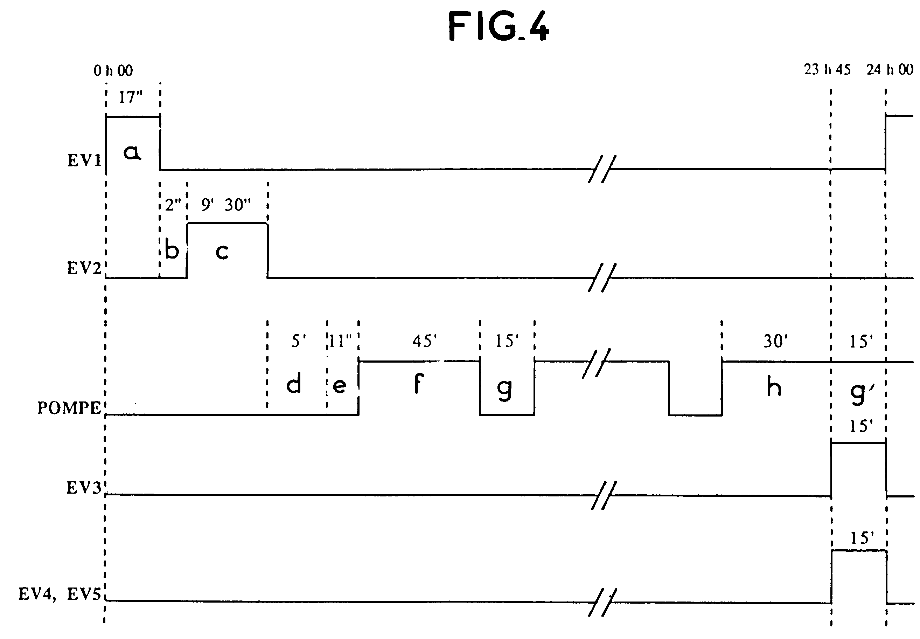

Les figures 1 et 2 représentent un dispositif de traitement des graisses et des fécules par bio-augmentation, selon l'invention, constitué, principalement, d'un bac à graisse **10**, à conduite d'arrivée **11** des effluents et à conduite de rejet **12**, dans lequel sont fixés des paniers **13** contenant des granulats d'argile **14**, sous lesquels est disposée une rampe **15** d'insufflation d'air par des buses **16** ; le dit bac à graisse **10** étant alimenté, périodiquement, en biomasse par une buse **17**, reliée à un bioréacteur **20** et à un compresseur **30**, par l'intermédiaire d'un système de vidange eau/air **40** et, respectivement, par une conduite **21**, contrôlée par une électro-vanne **EV5**, et par une conduite **31**, contrôlée par une électrovanne **EV4** ; le dit bioréacteur **20** comportant, en son milieu, une cloison cylindrique **22**, surélevée par rapport au fond, à la base et au centre de laquelle est disposée une buse d'aération **23**, reliée par une conduite **24** à la conduite **18** contrôlée par une électro-vanne **EV3**, alimentant, en air, la rampe **15** du bac à graisse **10**; le bioréacteur étant alimenté en bio-additifs liquides, contenus dans un réservoir **50**, par une conduite **51** contrôlée par les électrovannes **EV1** et **EV6**, et, en eau ,par une conduite **60** reliée à la conduite **51**, en amont de l'électro-vanne **EV6**, après contrôle par une électro-vanne **EV2** ; l'ensemble des électro-vannes **EV1** à **EV6** et le compresseur **30** étant gérés par un automate **70**, selon le diagramme représenté à la figure 4.

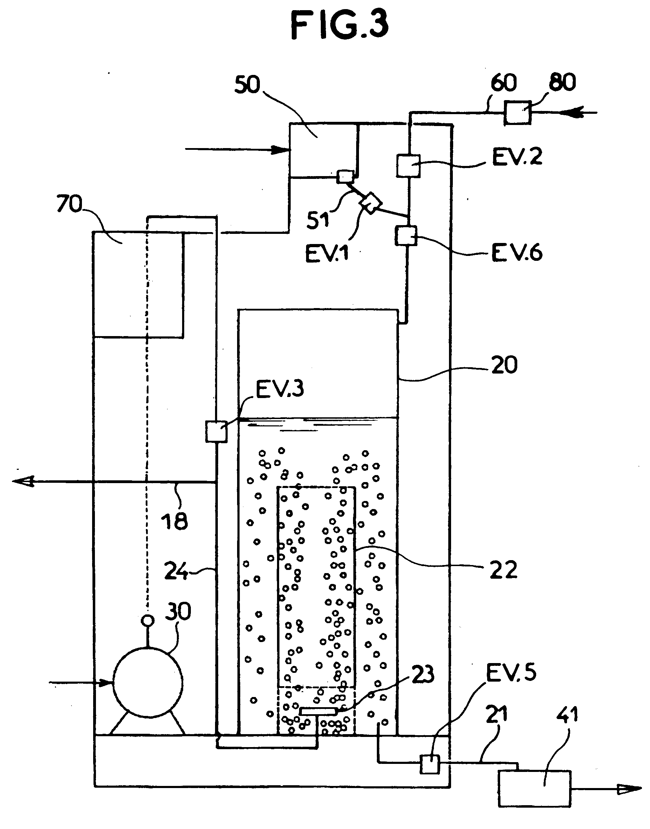

La figure 3 représente un mode de réalisation simplifié du dispositif selon l'invention, avec lequel la vidange du bioréacteur s'effectue par l'intermédiaire d'une pompe **41** ; ce qui implique la suppression de l'électro-vanne **EV4** et de la conduite **31** reliant le compresseur **30** au système de vidange ; le dit compresseur **30** étant alors réservé à l'oxygénation.

Le principe de la fermentation discontinue permet de reproduire les conditions d'un développement in fine, de contrôler la masse bactérienne et permet de garantir une qualité constante des métabolites, ainsi qu'une proportion reproductible des souches actives contenues dans le bio-additif.

Il est donc proposé, pour la production in situ, d'ensemencer un bioréacteur, à partir de ces bio-additifs, et de favoriser, ainsi, la croissance à partir du bio-additif (quantité de bactéries nécessaires et suffisantes pour favoriser l'accroissement de la masse de cellules à l'intérieur du bioréacteur).

La technique de fermentation utilisée consiste à introduire, ensemble, dans le bioréacteur, les composants milieu, substrat, bactéries.

Le fonctionnement du bioréacteur est régi par l'automate **70** du système de gestion de l'ensemble du dispositif.

Le procédé de fermentation utilise la technique aérobie, l'oxygène étant produit à partir de l'air transféré au moyen de l'ensemble compresseur **30** et buses de diffusion **16**, **23**.

Selon un mode de mise en oeuvre du procédé, conforme à la présente invention, la concentration optimale en substrat dans le milieu de culture, en bactéries constituant le bio-additif, est définie afin de répondre à la production par fermentation discontinue. Cette technique permet, de façon avantageuse, de s'affranchir de la concentration de produits toxiques résultant du métabolisme de la culture.

A l'issue de la fermentation de la cuvée, durant une période définie, l'ensemble des produits, résultant de la croissance bactérienne dans le bioréacteur, notamment le milieu et le substrat résiduels, la biomasse produite, est déversé dans le bac à graisse, au moyen de l'ouverture de l'électro-vanne **EV5** de contrôle de la conduite **21** d'alimentation du système de vidange **40** et de l'électro-vanne **EV4** de mise sous pression d'air de la conduite **31** reliant le compresseur **30** au dit système de vidange.

Le bac à graisse **10** fonctionne, également, de façon aérobie. Il utilise une partie de l'air produit par le compresseur **30** ; l'autre partie étant utilisée pour favoriser la production de biomasse dans le bioréacteur **20**.

L'aération du bac à graisse **10** permet, également, l'homogénéisation de son contenu par les remous qu'il provoque.

Dans ce but, le bac à graisse **10** a été favorablement équipé d'une rampe **15** de diffusion de l'air, par l'intermédiaire de buses **16** dirigées vers le fond du bac. Selon un mode de mise en oeuvre avantageux de la biomasse à l'intérieur du bac à graisse, celui-ci est équipé d'un ensemble de paniers **13**, remplis d'éléments de biofixation **14**, définis afin de favoriser la rétention de la masse active de bactéries à l'intérieur du bac à graisse **10**.

La nature et la forme des éléments de biofixation **14** sont choisies, en plus de leur pouvoir fixant, pour offrir la plus grande surface de contact entre l'oxygène dissous et la biomasse. De même, ils permettent un meilleur transfert de l'oxygène dans la phase liquide. Il est ainsi possible de favoriser la croissance bactérienne à l'intérieur même du bac à graisse **10**.

L'appareillage, permettant la production de cultures cellulaires dans le bioréacteur de fermentation, comporte des moyens **50**, **51** permettant l'alimentation en milieu, substrat, bactéries et des moyens d'alimentation en air **23**, **24**, **30** ; le dit bioréacteur comportant une cloison cylindrique **22** discontinue verticalement, favorisant la circulation du fluide à l'intérieur du bioréacteur.

Le dosage du substrat, des sels minéraux constituant le milieu et des bactéries constituant le bio-additif, s'effectue par l'intermédiaire d'une électro-vanne doseuse **EV1**, conçue à cet effet.

Le bioréacteur **20** est, avantageusement, alimenté en eau (par des sources extérieures à l'installation ou reprises dans l'installation), à partir de l'ouverture d'une vanne pilotée **EV2**. Une temporisation, éventuellement associée à un réducteur de pression **80**, permet de définir le volume souhaité de remplissage.

Après remplissage en eau et mélange de la solution milieu/substrat/bactéries, le programmateur de gestion **70** provoque l'ouverture d'une électro-vanne **EV3** et le démarrage du compresseur **30**, ce qui permet de diffuser l'air dans le bioréacteur **20**.

L'aération du bac **10** et du bioréacteur **20** s'effectue selon des cycles horaires, aération-période de repos (généralement 45 minutes d'aération pour 15 minutes de repos). Ces cycles se répètent entre chaque vidange et nouveau remplissage.

Les opérations d'ensemencement, de remplissage, d'aération et de vidange du bioréacteur **20** sont résumées dans le diagramme de la figure 4 correspondant à 24 heures, sur lequel l'ensemencement du bioréacteur, avec un bio-additif à concentration initiale de 10⁹ bactéries par ml, choisie à titre d'exemple, s'effectue sur 17 secondes, le remplissage débute 2 secondes plus tard et dure pendant 9 minutes 30 secondes, alors que la première séquence d'aération barbottage commence 16 secondes plus tard, pour être maintenue pendant 45 minutes, avec arrêt pendant 15 minutes, avec répétition jusqu'à écoulement d'un temps d'une durée de 23 heures 15 minutes et maintien de l'aération pendant 30 minutes, puis 15 minutes, avec recouvrement du fonctionnement des électro-vannes **EV3**, **EV4** et **EV5** pendant les dernières 15 minutes; les mémoires (**a**) à (**g**) ainsi que (**h**)et (**g'**),correspondant chacune à une séquence du programme pouvant être modifiées à volonté.

Le bioréacteur **20** permet, ainsi, de multiplier, au minimum par dix, la concentration en bactéries initiale, sur la période de 24 heures, choisie à titre d'exemple.

La biomasse finale peut révéler une répartition des souches différentes de celles du bio-additif. L'évolution reste, néanmoins, reproductible, et garantit une efficacité biologique constante, pour des conditions de température données, car la viabilité de la biomasse et la solubilité des corps gras décomposés sont favorisés par l'aération du bac, permettant l'oxygénation et le brassage du milieu. Ainsi, les effluents de cuisine se prêtent parfaitement à l'application du procédé et du dispositif selon l'invention, puisque leur température est généralement comprise dans l'intervalle de 20 à 40° C, donc, dans une plage biologiquement viable.

Le procédé et le dispositif selon l'invention ont été définis à partir de travaux de développement sur site réel, qui ont révélé les performances suivantes, par comparaison avec le procédé et le dispositif classique : le traitement provoque une modification profonde de la répartition des espèces en Triglycérides et produits de décomposition. Il conduit à une accumulation relative d'acides gras libres, tandis que la part relative des Triglycérides chute fortement. Les teneurs en Mono et Diglycérides évoluent de manière plus anarchique, mais traduisent, néanmoins, l'effet du traitement : ces composés intermédiaires, qui se forment habituellement dans les systèmes non contrôlés, sont, dans ce cas, nettement minoritaires.

Ainsi, ces résultats rendent compte d'une hydrolyse poussée des Triglycérides, et ce, même durant la première phase d'expérimentation, en dépit de la discontinuité des ajouts bactériens durant cette période.

L'un des éléments majeurs du traitement réside dans cette observation : le mélange traité ne contient pas plus de corps gras que le sous-nageant, témoin issu de la séparation des phases aqueuse et lipidique. C'est dire que les Triglycérides non seulement ne s'accumulent pas, mais sont, systématiquement, dégradés au cours de leur passage dans le bac à graisse, car, dans le cas contraire, l'homogénéisation des phases conduirait à un enrichissement spectaculaire du mélange en Triglycérides.

Une chute de 93 % de la quantité de corps gras totaux, et, notamment, d'acides gras libres, durant le week-end, où l'appareillage fonctionne sans plus d'apport d'effluent de cuisine, confirme encore ce phénomène. On montre, ainsi, que les acides gras libres sont, eux aussi, systématiquement dégradés sous l'effet de l'oxydation bactérienne.

L'équipement de fermentation est d'une conception volontairement rustique. Le pouvoir tampon du substrat maintient le pH dans des limites biologiquement acceptables, durant les 24 heures de chacun des cycles de culture. L'air est fourni en excès, afin de garantir un taux d'oxygène dissous, adéquate pour la prolifération de la biomasse.

Le rapport de la demande chimique en oxygène (DCO) à la demande biologique en oxygène au bout de 5 jours (DBO5) des sous-nageants du bac traité **10**, par rapport à ceux d'un bac témoin (non représenté), a montré que le rapport de ces deux paramètres, représentatifs de la pollution des eaux usées, était de 2,22 ± 19 % dans le bac témoin et de 2,31 ± 12% dans le bac traité.

Les résultats de cette expérimentation sont donc très encourageants. Ils rendent compte de l'hydrolyse poussée des Triglycérides, sous l'effet de l'activité bactérienne, et même de l'oxydation des produits de décomposition (acides gras libres) qui en résulte.

Le procédé et le dispositif selon l'invention sont destinés, principalement, au traitement des effluents domestiques liquides, de grands ensembles et de collectivités, mais ils pourraient être utilisés, aussi, dans l'industrie agro-alimentaire, sous réserve d'une adaptation particulière.

## Revendications

1. Procédé de dégradation, par voie biologique, des corps gras et des fécules interceptés dans les bacs à graisse, disposés sur certains collecteurs d'eau usée, faisant appel à des colonies de bactéries, sélectionnées en fonction de leur pouvoir lipolytique, consistant à traiter les graisses et les fécules par bio-augmentation, à partir de ferments obtenus par fermentation aérobie dans un bioréacteur de cultures enrichies en micro-organismes, à partir d'un bio-additif constitué de plusieurs souches sélectionnées, de sels minéraux, d'un substrat et d'eau, avec recyclage des ferments, caractérisé en ce que :
- les ferments ainsi obtenus sont transférés séquentiellement sur les éléments de fixation situés dans le bac à graisse, pour faciliter l'élimination des produits inhibiteurs de fermentation,
- l'eau contenue dans le bac à graisse et dans le bioréacteur est maintenue à une teneur en oxygène contrôlée,
- le bio-additif est constitué des souches suivantes:
- aérobacter aérogènes,
- bacillus subtilis,
- cellulomonas biazotea,
- nitrosomonas sp.,
- nitrobacter winogradskyi,
- pseudomonas denitrificans et pseudomonas stutzeri,
- rhodopseudomonas palustris,
- le contrôle de la concentation optimale des bactéries est obtenu à partir de la mise en oeuvre d'une quantité de milieu et de bactéries définie par un dosage et un ensemencement constant,
- la concentration finale est comprise entre 10⁷ et 10¹⁰ bactéries par ml,
- le rapport de volume utile entre le bioréacteur et le bac à graisse est de 15 à 40, pour un bio-additif à concentration initiale de 10⁹ bactéries par ml,
- la biomasse, déversée dans le bac à graisse subit, au préalable, une fermentation d'une durée de 12 à 72 heures.

2. Procédé selon la revendication 1, caractérisé en ce que la teneur en oxygène de l'eau, environnant la culture en cours de développement et la biomasse située dans le bac à graisse, est maintenue entre 4 et 8 p.p.m.

3. Procédé selon la revendication 1, caractérisé en ce que l'oxygénation est obtenue par diffusion ascendante d' air, selon des cycles horaires correspondant, généralement, à 45 minutes d'aération pour 15 minutes de repos.

4. Dispositif d'application du procédé selon les revendications 1 à 3 de dégradation par voie biologique des corps gras et des fécules interceptés dans les bacs à graisse disposés sur certains collecteurs d'eau usée, faisant appel à des colonies de bactéries sélectionnées en fonction de leur pouvoir lipolytique, consistant à traiter les graisses et les fécules par bio-augmentation à partir d'un bio-additif, ledit dispositif comportant un bac à graisse (**10**) dans lequel sont fixés des paniers (**13**) contenant des éléments de fixation (**14**), dans lequel sont transférés les ferments provenant d'un bioréacteur (**20**) caractérisé en ce que le bioréacteur (**20**) est constitué d'une enveloppe cylindrique d'axe vertical comportant une cloison cylindrique interne (**22**) dont la base est surélevée par rapport au fond dudit bioréacteur (**20**) et dont la hauteur est inférieure à celle de la paroi externe de celui-ci, en ce que les moyens assurant le dosage du substrat des sels minéraux constituant le milieu et des colonies de bactéries constituant le bio-additif sont constitués d'un réservoir (**50**) relié au bioréacteur par l'intermédiaire d'une tuyauterie (**51**) et d'une électro-vanne doseuse (**EV₁**), en ce que les moyens assurant l'alimentation en eau à teneur en oxygène contrôlée, du bioréacteur (**20**) et du bac à graisse (**10**) sont constitués d'un compresseur (**30**) relié respectivement à une buse d'aération (**23**) située dans le bas dudit bioréacteur (**20**) et à une rampe (**15**) à buses d'insufflation (**16**) disposée sous les paniers (**13**) par l'intermédiaire de conduites (**18**,**24**,**15**) et d'une électro-vanne (**EV₃**), en ce que les moyens assurant le transfert des ferments du bioréacteur (**20**) vers le bac à graisse (**10**) sont constitués d'un système eau/air (**40**) relié au compresseur (**30**) par une tuyauterie (**31**) et une électro-vanne (**EV**₄) et à une buse d'injection (**17**) située à la partie supérieure du bac à graisse (**10**) et en ce que les éléments de fixation (**14**) de la biomasse sont des granulés d'argile cuite.

5. Dispositif selon la revendication 4, caractérisé en ce que les électro-vannes (**EV**₁ à **EV**₅) contrôlant l'apport de bio-additif, l'introduction d'eau, l'oxygénation et la vidange d'une part, et le fonctionnement du compresseur (**30**) fournissant l'air aux buses d'aération (**16**,**23**), d'autre part, sont commandées par un automate programmable (**70**).

## Claims

1. Biological degradation process for fatty substances and starches trapped in grease tanks, provided on certain main drains, using bacterial colonies, selected for their lipolytic power, consisting of treating the fats and starches by bio-augmentation, starting from ferments obtained by aerobic fermentation in a bioreactor of cultures enriched with microorganisms, from a bio-additive constituted by several selected strains, mineral salts, a substrate and water, with recycling of the ferments, characterized in that:
- the ferments thus obtained are sequentially transferred onto the fixation elements situated in the grease tank, to facilitate the elimination of the fermentation inhibiting products,
- the water contained in the grease tank and in the bioreactor is maintained at a controlled oxygen content,
- the bio-additive is constituted by the following strains:
- aerobacter aerogenes,
- bacillus subtilis,
- cellulomonas biazotea,
- nitrosomonas sp.,
- nitrobacter winogradskyi,
- pseudomonas denitrificans and pseudomonas stutzeri,
- rhodopseudomonas palustris,
- control of the optimal concentration of the bacteria is obtained by using a quantity of medium and of bacteria defined by a constant dosage and inoculation,
- the final concentration is comprised between 10⁷ and 10¹⁰ bacteria per ml,
- the ratio of useful volume between the bioreactor and the grease tank is 15 to 40, for a bio-additive at an initial concentration of 10⁹ bacteria per ml,
- the biomass unloaded in the grease tank undergoes, beforehand, a fermentation lasting 12 to 72 hours.

2. Process according to claim 1, characterized in that the oxygen content of the water surrounding the developing culture and the biomass situated in the grease tank is maintained between 4 and 8 ppm.

3. Process according to claim 1, characterized in that oxygenation is obtained by ascending diffusion of air, according to hourly cycles corresponding, in general, to 45 minutes of aeration per 15 minutes rest.

4. Apparatus for applying the process according to claims 1 to 3 for the biological degradation of fatty substances and starches trapped in the grease tanks provided on certain main drains, using bacterial colonies selected for their lipolytic power, consisting of treating the fats and the starches by bio-augmentation starting from a bio-additive, said apparatus comprising a grease tank (10) in which baskets (13) are fixed containing fixation elements (14), into which the ferments originating from a bioreactor (20) are transferred characterized in that the bioreactor (20) is constituted by a cylindrical casing with a vertical axis containing an inner cylindrical partition (22) the base of which is elevated relative to the bottom of said bioreactor (20) and the height of which is below that of the outer wall of the bioreactor, in that the means providing the dosage of the mineral salts substrate constituting the medium and of the bacterial colonies constituting the bio-additive are constituted by a reservoir (50) connected to the bioreactor by means of pipework (51) and a dosing electrovalve (EV₁), in that the means providing the supply of water with a controlled oxygen content to the bioreactor (20) and the grease tank (10) are constituted by a compressor (30) connected respectively to an aeration nozzle (23) situated in the bottom of said bioreactor (20) and to a rail (15) with insufflation nozzles (16) arranged under the baskets (13) by means of pipes (18,24,15) and an electrovalve (EV₃), in that the means providing the transfer of the ferments from the bioreactor (20) to the grease tank (10) are constituted by a water/air system (40) connected to the compressor (30) by pipework (31) and an electrovalve (EV₄) and to an injection nozzle (17) situated in the upper part of the grease tank (10) and in that the fixation elements (14) of the biomass are fired clay granules.

5. Apparatus according to claim 4, characterized in that the electrovalves (EV₁ to EV₅) controlling the supply of bio-additive, the introduction of water, oxygenation and drainage on the one hand, and the operation of the compressor (30) supplying the air to the aeration nozzles (16,23) on the other hand, are controlled by a programmable controller (70).

## Patentansprüche

1. Verfahren zur Degradierung, auf biologischem Weg, von in an bestimmten Brauchwasserkollektoren angeordneten Fettauffangbehältern aufgefangenen Fettkörpern und Stärken mit Hilfe von in Abhängigkeit von ihrem Lipolysevermögen selektionierten Bakterienkolonien durch Behandlung der Fette und Stärken durch Bio-Vermehrung, wobei von durch aerobe Fermentation, in einem Bioreaktor, von mit Mikroorganismen angereicherten Kulturen, ausgehend von einem von mehreren selektionierten Stämmen, Mineralsalzen, einem Substrat und Wasser gebildeten Bio-Additiv, erhaltenen Ferment-Organismen, unter Rückführung der Ferment-Organismen, ausgegangen wird, dadurch gekennzeichnet, daß
- die so erhaltenen Ferment-Organismen sequentiell auf die in dem Fettauffangbehälter angeordneten Halteelemente transferiert werden, um die Eliminierung inhibierender Fermentationsprodukte zu erleichtern,
- das im Fettauffangbehälter und im Bioreaktor enthaltene Wasser auf einem kontrollierten Sauerstoffgehalt gehalten wird,
- das Bio-Additiv von den folgenden Stämmen gebildet wird
- aerobacter aerogenes,
- bacillus subtilis,
- cellulomonas biazotea,
- nitrosomonas sp.,
- nitrobacter winogradskyi,
- pseudomonas denitrificans und pseudomonas stutzeri,
- rhodopseudomonas palustris,
- die Kontrolle der optimalen Bakterienkonzentration ausgehend von dem Einsatz einer Milieu- und Bakterienmenge vorgenommen wird, die durch eine konstante Zudosierung und Beimpfung definiert ist,
- die Endkonzentration zwischen 10⁷ und 10¹⁰ Bakterien pro ml liegt,
- das Verhältnis des Nutzvolumens zwischen dem Bioreaktor und dem Fettauffangbehälter zwischen 15 bis 40 liegt, für ein Bio-Additiv in einer Anfangskonzentration von 10⁹ Bakterien pro ml,
- die Biomasse, bevor sie in den Fettauffangbehälter gegeben wird, einer Fermentierung für eine Dauer von 12 bis 72 Stunden unterworfen wird.

2. Verfahren nach Anspruch 1, dadurch gekennzeichnet, daß der Sauerstoffgehalt des Wassers, das die Kultur im Laufe der Entwicklung und die im Fettauffangbehälter vorhandene Biomasse umgibt, zwischen 4 und 8 ppm gehalten wird.

3. Verfahren nach Anspruch 1, dadurch gekennzeichnet, daß die Oxygenierung durch aufsteigende Diffusion von Luft nach stündlichen Zyklen vorgenommen wird, die im allgemeinen 45 Minuten Belüftung auf 15 Minuten Ruhezeit entsprechen.

4. Vorrichtung zur Durchführung des Verfahrens nach Anspruch 1 bis 3 zur Degradierung, auf biologischem Weg, von in an bestimmten Brauchwasserkollektoren angeordneten Fettauffangbehältern aufgefangenen Fettkörpern und Stärken mit Hilfe von in Abhängigkeit von ihrem Lipolysevermögen selektionierten Bakterien durch Behandlung der Fette und Stärken durch Bio-Vermehrung, ausgehend von einem Bio-Additiv, wobei die Vorrichtung einen Fettauffangbehälter (10) aufweist, in dem Körbe (13) befestigt sind, die Fixierungselemente (14) enthalten, in welche die aus einem Bioreaktor (20) stammenden Ferment-Organismen transferiert werden, dadurch gekennzeichnet, daß der Bioreaktor (20) von einer zylindrischen Hülle mit vertikaler Achse gebildet wird, die eine innere zylindrische Trennwand (22) aufweist, deren Basis in Bezug auf den Boden des Bioreaktors (20) erhöht ist und deren Höhe geringer ist als die der äußeren Wand desselben, daß die Mittel, die die Zudosierung des Substrats, der Mineralsalze, die das Milieu bilden und der Bakterienkolonien, die das Bio-Additiv bilden, aus einem Reservoir (50) bestehen, das mit dem Bioreaktor über eine Leitung (51) und ein Elektro-Dosierventil (EV₁) verbunden ist, daß die die Versorgung mit Wasser mit kontrolliertem Sauerstoffgehalt sicherstellenden Mittel des Bioreaktors (20) und des Fettauffangbehälters (10) von einem Kompressor (30), der jeweils mit einer im unteren Teil des Bioreaktors (20) angeordneten Belüftungsdüse (23) und einer unter den Körben (13) angeordneten Reihe (15) von Einblasdüsen (16) über Leitungen (18, 24, 15) verbunden ist, und einem Elektroventil (EV₃) gebildet werden, daß die den Transfer der Ferment-Organismen aus dem Bioreaktor (20) in den Fettauffangbehälter (10) sicherstellenden Mittel von einem Wasser-/Luft-System (40) gebildet werden, das mit dem Kompressor (30) über eine Rohrleitung (31) und ein Elektroventil (EV₄) verbunden ist, sowie mit einer Einspritzdüse (17), die im oberen Teil des Fettauffangbehälters (10) angeordnet ist, und daß die Befestigungselemente (14) für die Biomasse aus gebranntem Tongranulat bestehen.

5. Vorrichtung nach Anspruch 4, dadurch gekennzeichnet, daß die Elektroventile (EV₁ bis EV₅), die die Zuführung des Bio-Additivs, die Einführung des Wassers, die Oxygenierung und die Entleerung einerseits und die Funktion des Kompressors (30), der Luft an die Belüftungsdüsen (16, 23) liefert, andererseits, von einem programmierbaren Automaten (70) gesteuert sind.
